# EUROPÄISCHE PATENTSCHRIFT

(11) **EP 3 475 601 B1**
(45) Veröffentlichungstag und Bekanntmachung des Hinweises auf die Patenterteilung: **06.07.2022**
(21) Anmeldenummer: 17727487.5
(22) Anmeldetag: 30.05.2017
(51) Int. Cl.: F16L 27/08

(54) **ANSCHLUSSEINRICHTUNG ZUR REALISIERUNG EINES DREHANSCHLUSSES FÜR EINE ANSCHLUSSKOMPONENTE**
CONNECTION DEVICE FOR THE REALIZATION OF A ROTARY CONNECTION FOR A CONNECTION COMPONENT
SYSTÈME DE RACCORDEMENT PERMETTANT DE RÉALISER UN RACCORD TOURNANT POUR UN ÉLÉMENT DE RACCORDEMENT

(30) Priorität: 23.06.2016 DE 102016007917
(43) Veröffentlichungstag der Anmeldung: 01.05.2019
(73) Patentinhaber: EISELE GmbH, 71332 Waiblingen (DE)
(72) Erfinder: OESTREICH, Franz Markus, 71334 Waiblingen (DE)
(74) Vertreter: Humpl-Wagner, Esther
(86) Internationale Anmeldenummer: PCT/EP2017/000631
(87) Internationale Veröffentlichungsnummer: WO 2017/220183

(56) Entgegenhaltungen:
- EP-A2- 1 046 852
- DE-U1-202009 005 674
- US-A- 2 331 615
- US-A- 3 002 769

## Beschreibung

Die Erfindung betrifft eine Anschlusseinrichtung zur Realisierung eines Drehanschlusses für eine Anschlusskomponente, mit den Merkmalen im Oberbegriff von Anspruch 1.

Derartige Einrichtungen werden beispielsweise zum Verbinden von Anschlusskomponenten in Form zweier Schlauchleitungen oder zum Verbinden von einer Schlauchleitung mit einem festen Leitungsanschluss eingesetzt, wobei durch die von der Lagereinrichtung zur Verfügung gestellte Verdrehbarkeit der Anschlussstellen möglicherweise auftretende Biege- oder Torsionsbelastungen der die Anschlusskomponenten bildenden Leitungsabschnitte reduziert oder vermieden sind. In den Leitungsabschnitten können unterschiedliche Medien geführt werden, beispielsweise Gase oder Flüssigkeiten.

Eine Anschlusseinrichtung der eingangs genannten Gattung ist aus dem Dokument DE 20 2009 005 674 U1 bekannt. Die Lagereinrichtung ist bei dieser Einrichtung durch einen ein Gleitlager bildenden Innenwandabschnitt eines hohlwellenartigen Anschlussteils gebildet, das ein durch einen Rotationskörper gebildetes Gehäuseteil umfasst. Bei dieser Anordnung ist bei der durch den Gleitlagerabschnitt zugelassenen axialen Verschiebbarkeit keine ausreichende Stabilität des Verbindungsbereichs zwischen Gehäuse und drehbarem Anschlussteil, insbesondere keine Betriebssicherheit bei Auftreten von zwischen den Anschlussteilen wirkenden Längskräften, erreichbar.

Die US 2 331 615 offenbart eine Anschlusseinrichtung, insbesondere zur Realisierung eines Drehanschlusses für eine Anschlusskomponente, mit einem Gehäuse, das eine Anschlussstelle für eine fluidführende Leitung und eine Lagereinrichtung aufweist, mittels deren relativ drehbar zum Gehäuse ein wellen- oder achsförmiges Anschlussteil gelagert ist, das eine weitere Anschlussstelle für die jeweilige Anschlusskomponente aufweist, wobei die Lagereinrichtung zumindest ein Wälzlager aufweist, das mit der Außenseite seines Außenringes in Anlage mit dem Gehäuse und mit der Außenseite seines Innenringes in Anlage mit dem drehbaren Anschlussteil ist, und wobei die Lagereinrichtung neben dem Wälzlager ein Gleitlager aufweist, das innenumfangsseitig das drehbare Anschlussteil umfasst.

Die US 3 002 769 und die EP 1 046 852 A2 offenbaren weitere Anschlusseinrichtungen.

Ausgehend von diesem Stand der Technik stellt sich die Erfindung die Aufgabe, eine gattungsgemäße Anschlusseinrichtung bereit zu stellen, die sich bei kompakter und mediendichter Bauform durch eine hohe mechanische Stabilität auszeichnet.

Erfindungsgemäß ist diese Aufgabe durch eine Anschlusseinrichtung gelöst, die die Merkmale des Patentanspruchs 1 in seiner Gesamtheit aufweist.

Gemäß dem kennzeichnenden Teil des Anspruchs 1 ist die erfindungsgemäße Anschlusseinrichtung dadurch gekennzeichnet, dass sich das Gleitlager stirnseitig an einem Einpressring des Gehäuses abstützt, der das Ende des Anschlussteils unter Beibehalten eines radialen und axialen Abstandes umfasst, und dass das Gleitlager ansonsten in einem Abstandsring aufgenommen ist.

Durch zwei im axialen Abstand voneinander angeordnete Lagerstellen ergibt sich eine besonders hohe Biegefestigkeit der Lagerung, wobei das in einem Abstandsring aufgenommene Gleitlager durch die stirnseitige Anlage an einem mit dem Gehäuse fest verbundenen Einpressring in Axialrichtung gesichert ist.

Ferner ist vorgesehen, dass die Lagereinrichtung zumindest ein Wälzlager aufweist, das mit der Außenseite seines Außenringes in Anlage mit dem Gehäuse und mit der Außenseite seines Innenringes in Anlage mit dem drehbaren Anschlussteil ist. Bei dieser Anordnung mit auf dem drehbaren Anschlussteil gesichertem Innenring, der vorzugsweise durch Verpressen axial unverschiebbar auf dem drehbaren Anschlussteil festgelegt ist, ist eine gegen Axialkräfte sowie auch gegen Biegekräfte besonders widerstandsfähige Drehlagerung zwischen Gehäuse und Anschlussteil ausbildbar.

Als Wälzlager kann mit Vorteil ein Kugellager vorgesehen sein.

Bei vorteilhaften Ausführungsbeispielen ist der Abstandsring mit dem Gleitlager zum Gehäuse hin, insbesondere mit einem O-Ring, radial abgedichtet und stützt sich in axialer Richtung an einer weiteren Dichtung ab, insbesondere in Form eines Wellendichtringes, der das Anschlussteil umfasst und gegenüberliegend zu dem Abstandsring eine Anlagefläche für einen Distanzring aufweist, der an dem Außenring des Kugellagers stirnseitig angreift. Diese Anordnung gewährleistet eine dauerhaft hohe Mediendichtheit der drehbaren Verbindung zwischen Gehäuse und Anschlussteil.

Mit Vorteil kann die Anordnung derart getroffen sein, dass der Distanzring im Querschnitt gesehen winkelförmig ausgebildet ist, im Bereich seines einen Schenkels in Anlage mit der weiteren Dichtung ist und zu dieser gegenüberliegend einen axialen Abstand zu einem radial vorstehenden Lagerabsatz des Anschlussteils aufweist, mit dem das Anschlussteil sich an dem Innenring des Wälzlagers stirnseitig abstützt. Dadurch ist der Abstandsring zwischen Einpressring und Distanzring am Gehäuse axial gesichert.

Bei vorteilhaften Ausführungsbeispielen ist das Gehäuse zweiteilig ausgebildet, wobei ein Gehäuseteil die Lagereinrichtung und das andere Gehäuseteil die zugehörige Anschlussstelle aufweist und wobei im Bereich der Verbindung der beiden Gehäuseteile der Einpressring sich zumindest teilweise am Abstandsring mit seinem Gleitlager abstützt.

Weiterhin kann das drehbar gelagerte und mittels der Lagereinrichtung im Gehäuse in axialer Richtung fixierte Anschlussteil mit seiner zugehörigen Anschlussstelle aus dem Gehäuse herausragen, wobei an der Stelle des Durchgriffs des Anschlussteils eine Ringöffnung zwischen Gehäuse und Anschlussteil geschaffen ist, die dem Durchgriff von Teilen der Anschlusskomponente dient, die sich am Innenring des Wälzlagers stirnseitig abstützen und mit dem Anschlussteil fest verbindbar sind. Diese Verbindung kann mit Vorteil durch eine Verschraubung gebildet sein.

Mit Vorteil kann die Anordnung so getroffen sein, dass zwischen dem Einpressring und dem weiteren Gehäuseteil ein weiterer Dichtring angeordnet ist und ebenso an dem weiteren Gehäuseteil im Bereich des Übergangs zu der Anschlussstelle für die fluidführende Leitung.

Gemäß dem Patentanspruch 8 ist Gegenstand der Erfindung auch eine Anschlussvorrichtung, bestehend aus mindestens einer Anschlusseinrichtung nach einem der Ansprüche 1 bis 7 und einer mit dieser gekoppelten Anschlusskomponente, die mittels der Lagereinrichtung und dem insoweit drehbar gelagerten Anschlussteil gegenüber der Anschlusseinrichtung relativ zu dieser bewegbar an diese fluidführend angeschlossen ist.

Die dieser Anschlussvorrichtung zugehörige Anschlusskomponente kann von ihrem Gehäuseaufbau her linear oder winkelförmig verlaufend ausgeführt sein und an ihrem freien Ende eine Schnellkupplung für die Aufnahme einer weiteren fluidführenden Leitung tragen. Eine derartige Schnellkupplung kann in der Art einer mittels einer Spannmutter betätigbaren Spannzangeneinrichtung bekannter Bauweise ausgebildet sein.

Nachstehend ist die Erfindung anhand von in der Zeichnung dargestellten Ausführungsbeispielen im Einzelnen erläutert. Es zeigen:
- Fig. 1: eine perspektivische Schrägansicht eines Ausführungsbeispiels der erfindungsgemäßen Anschlusseinrichtung;
- Fig. 2: einen halbseitigen Längsschnitt des Ausführungsbeispiels;
- Fig. 3: eine perspektivische Schrägansicht des Ausführungsbeispiels der Anschlusseinrichtung mit einer daran angeschlossenen Anschlusskomponente linearer Bauweise;
- Fig. 4: einen Längsschnitt des in Fig. 3 Gezeigten;
- Fig. 5: eine perspektivische Schrägansicht des Ausführungsbeispiels der Anschlusseinrichtung mit einer daran angeschlossenen Anschlusskomponente winkelförmiger Bauweise; und
- Fig. 6: einen zentralen Winkelschnitt des in Fig. 5 Gezeigten.

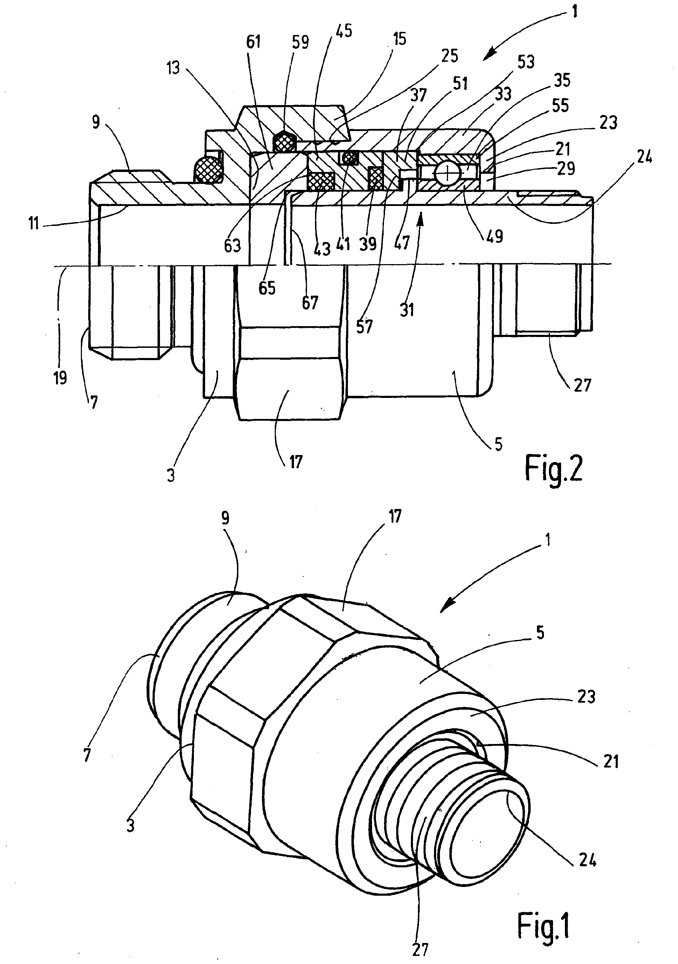

Die Fig. 1 und 2 zeigen ein Ausführungsbeispiel der erfindungsgemäßen Anschlusseinrichtung ohne an diese angeschlossene Anschlusskomponente.

Die Einrichtung weist ein Gehäuse 1 auf, das aus einem metallischen Werkstoff, wie einer Bronzelegierung, besteht und aus zwei Gehäuseteilen 3 und 5 zusammengesetzt ist. Am in Fig. 1 und 2 linksseitig gelegenen Ende ist am Gehäuseteil 3 eine Anschlussstelle 7 ausgebildet, die ein Außengewinde 9 für eine Anschlussverschraubung mit einer nicht gezeigten Anschlusskomponente aufweist. Das als Hohlkörper gestaltete Gehäuseteil 3 weist eine koaxial durchgehende Bohrung 11 auf, die an der Anschlussstelle 7 nach außen mündet und sich auf etwa halber Länge des Gehäuseteils 3 unter Bildung einer in einer Radialebene verlaufenden Schulter 13 auf etwa den doppelten Durchmesser aufweitet. In dem erweiterten Endbereich der Bohrung 11 weist das im Außenumfang erweiterte Endteil 15 des Gehäuseteils 3 einen Außensechskant 17 auf.

Das zweite Gehäuseteil 5 hat die Form einer kreiszylindrischen Hülse mit einer zur Achse 19 konzentrischen Durchgriffsöffnung 21, die sich an einen radial nach innen vorspringenden Endrand 23 des hülsenförmigen Körpers des Gehäuseteils 5 an dessen in Fig. 1 und 2 rechtsseitig gelegenem Ende befindet. An dem dem ersten Gehäuseteil 3 zugewandten Endbereich ist das Gehäuseteil 5 bei 25 mit dem den Endbereich übergreifenden Endteil 15 des ersten Gehäuseteils 3 durch Verpressen fest verbunden. An dem der Anschlussstelle 7 entgegengesetzten Ende ist eine zweite Anschlussstelle an einem Anschlussteil in Form einer Hohlwelle 24 gebildet, die im Gehäuse 1 drehbar gelagert ist und die fluidführende Fortsetzung der Bohrung 11 des ersten Gehäuseteils 3 bildet. An der Hohlwelle 24 ist die Anschlussstelle für die wiederum nicht dargestellte Anschlusskomponente durch ein Außengewinde 27 gebildet, das sich an dem aus dem Gehäuseteil 5 heraus erstreckenden Endabschnitt der Hohlwelle 24 befindet. Der Durchmesser der für den Durchtritt der Hohlwelle 24 vorgesehenen Bohrung 21 des Gehäuseteils 5 ist derart bemessen, dass zwischen Hohlwelle 24 und Endrand 23 des Gehäuseteils 5 ein Ringspalt 29 gebildet ist.

Die Hohlwelle 24, die den Fluidweg der Bohrung 11 im Wesentlichen absatzlos fortsetzt, ist im zweiten Gehäuseteil 5 mittels einer Lagereinrichtung 31 drehbar gelagert, die aus einem Paket mehrerer Bauteile gebildet ist, das auf dem innerhalb des Gehäuseteils 5 aufgenommenen Endbereich der Hohlwelle 24 angeordnet ist und sich zwischen Hohlwelle 24 und Mantel 33 des Gehäuseteils 5 im Wesentlichen über dessen gesamte axiale Länge erstreckt. In Aufeinanderfolge in Fig. 2 von rechts nach links weist das Bauteilpaket der Lagereinrichtung 31 ein Kugellager 35, einen winkelförmigen Distanzring 37, einen Wellendichtring 39, einen O-Ring 41 sowie ein Gleitlager 43 auf, wobei Wellendichtring 39, O-Ring 41 und Gleitlager 43 in einem Abstandsring 45 aufgenommen sind. In etwa dem mittleren Bereich des die Lagereinrichtung 31 aufnehmenden Längenabschnitts der Hohlwelle 24 weist diese einen radial nach außen vorstehenden Absatz in Form eines Ringes 47 mit quadratischem Querschnitt auf. Bei der Herstellung der Anschlusseinrichtung wird so vorgegangen, dass die Hohlwelle 24 mit dem Paket der Lagereinrichtung 31 in das Gehäuseteil 5 eingebaut wird, bevor das Gehäuse 1 durch Verpressen der Gehäuseteile 3 und 5 geschlossen wird. Dabei werden zunächst Hohlwelle 24 und Kugellager 35 so verpresst, dass dieses mit seinem Innenring 49 am Ring 47 der Hohlwelle 24 anliegt. Auf der gegenüberliegenden Seite des Ringes 47 werden die weiteren Bauteile der Lagereinrichtung 31 auf der Hohlwelle 24 vormontiert, wonach diese zusammen mit dem Paket der Lagereinrichtung 31 von der offenen Seite des Gehäuseteils 5 her eingelegt werden. Dabei kommt der winkelförmige Distanzring 37 mit seinem radial außen liegenden Schenkel 51 zur Anlage mit einem Absatz 53 der Innenseite des Mantels 33 sowie zur Anlage mit dem Außenring 55 des Kugellagers 35. Bei dieser Position des Distanzringes 37 befindet sich dessen radial innen liegender Schenkel in einem axialen Abstand vom radial vorstehenden Ring 47 der Hohlwelle 24. An der vom Ring 47 abgewandten Seite liegt der Abstandsring 45 mit dem zugehörigen Wellendichtring 39, dem O-Ring 41 und dem Gleitlager 43 am Distanzring 37 an.

Vor dem Schließen des Gehäuses 1 durch Verpressen der Gehäuseteile 3 und 5 bei 25 werden an der Innenseite des Endteils 15 ein O-Ring 59 sowie ein Einpressring 61 eingelegt, der mit seiner von der Lagereinrichtung 31 abgewandten Seite an der Schulter 13 des Gehäuseteils 3 anliegt. Auf der der Lagereinrichtung 31 zugewandten Seite weist der Einpressring 61 eine in einer Radialebene verlaufende Ringfläche 63 für die Anlage am Abstandsring 45 und dem Gleitlager 43 auf. An das radial innenliegende Ende der Ringfläche 63 schließt sich eine koaxiale Vertiefung 65 an, die für das Wellenende 67 der Hohlwelle 24 einen Freiraum bildet, in den sich die Welle 24 ohne Berührung mit dem Einpressring 61 erstreckt, wenn das Gehäuse 1 geschlossen ist. Hierfür wird der Einpressring 61 durch den das Gehäuse 1 schließenden Pressvorgang festgelegt. Wie Fig. 2 zeigt, ist bei geschlossenem Gehäuse 1 die Lagereinrichtung 31 zwischen Ringfläche 63 des Einpressringes 61 und dem Öffnungsrand 23 des Gehäuseteils 5 formschlüssig axial gesichert. Das Gleitlager 43, das im Abstandsring 45 durch die anliegende Ringfläche 63 des Einpressringes 61 gesichert ist, ist aus einem eine hohe Abriebfestigkeit und einen niedrigen Reibungskoeffizienten aufweisenden Werkstoff gebildet, beim vorliegenden Beispiel aus einem thermoplastischen Kunststoff, wie Polyoxymethylen (POM), einem Werkstoff, der sich durch niedrigen Reibwert und Dimensionsstabilität auszeichnet. Durch den freien Spalt zwischen dem radial vorstehenden Ring 47 der Welle 24 und dem Distanzring 37 und durch die Vertiefung 65 im Einpressring 61, in die sich unter Bildung eines Spalts das Wellenende 67 berührungsfrei erstreckt, ist die Hohlwelle 24 im Gehäuse 1 leicht drehbar.

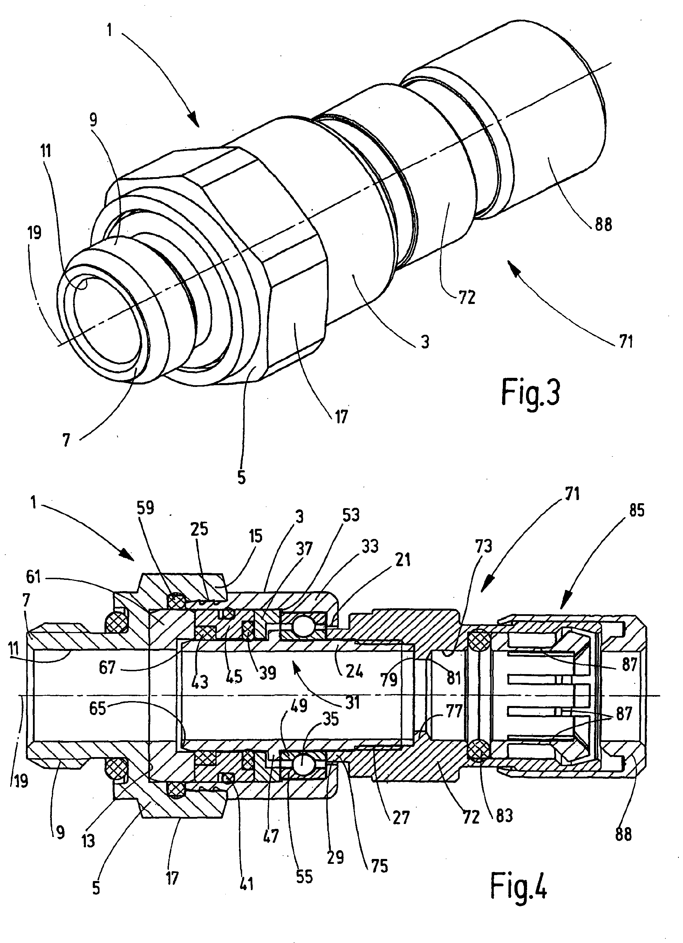

Die Fig. 3 und 4 zeigen das Gehäuse 1 in Verbindung mit einer Anschlusskomponente 71, die an der vom freien Ende der Hohlwelle 24 gebildeten Anschlussstelle durch Verschrauben mit dem Außengewinde 27 angeschlossen ist. Die Anschlusskomponente 71 weist einen Hohlkörper 72 mit einem koaxialen inneren Kanal 73 auf, der beim angeschlossenen Zustand den Fluidweg der Hohlwelle 24 fortsetzt. Wie Fig. 4 zeigt, weist der Hohlkörper 72 an dem dem Gehäuse 1 zugewandten Ende einen Abschnitt 75 verringerter Wandstärke auf, der sich bei dem verschraubten, in Fig. 4 gezeigten Zustand in den Ringspalt 29 an der Durchgriffsöffnung 21 des Gehäuseteils 5 erstreckt und sich am Innenring 49 des Kugellagers 35 abstützt. Der Kanal 73 weist eine Verengung in Form eines radial nach innen vorstehenden Ringes 77 auf, der auf einer Seite eine ebene Anlagefläche 79 aufweist, die beim verschraubten Zustand (Fig. 4) am Ende der Hohlwelle 24 anliegt. Die gegenüberliegende Seite des Ringes 77 bildet eine Schrägfläche 81, an der das nicht gezeigte Ende einer mittels der Anschlusskomponente 71 angeschlossenen Leitung, wie einer Schlauchleitung, anliegt, die sich durch einen O-Ring 83 hindurch erstreckt. Für die Befestigung einer derartigen Schlauchleitung weist die Anschlusskomponente 71 eine Schnellkupplung 85 auf, die beim gezeigten Beispiel durch eine Spannzangeneinrichtung üblicher Bauweise gebildet ist, die einen Korb von flexiblen Spannfingern 87 aufweist, die mittels einer Spannhülse 88 für den Spannvorgang betätigbar sind.

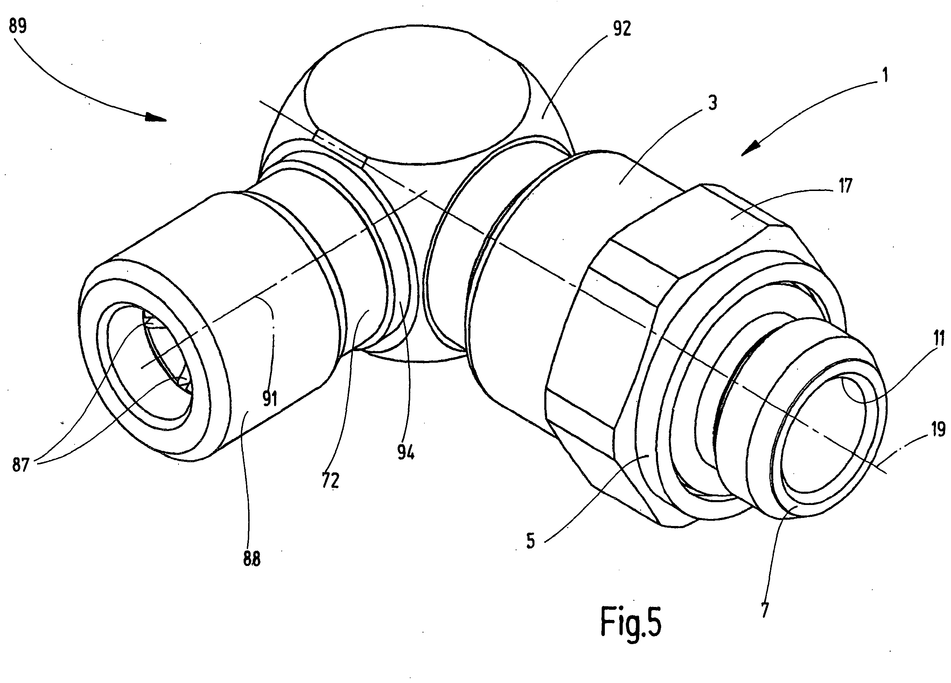

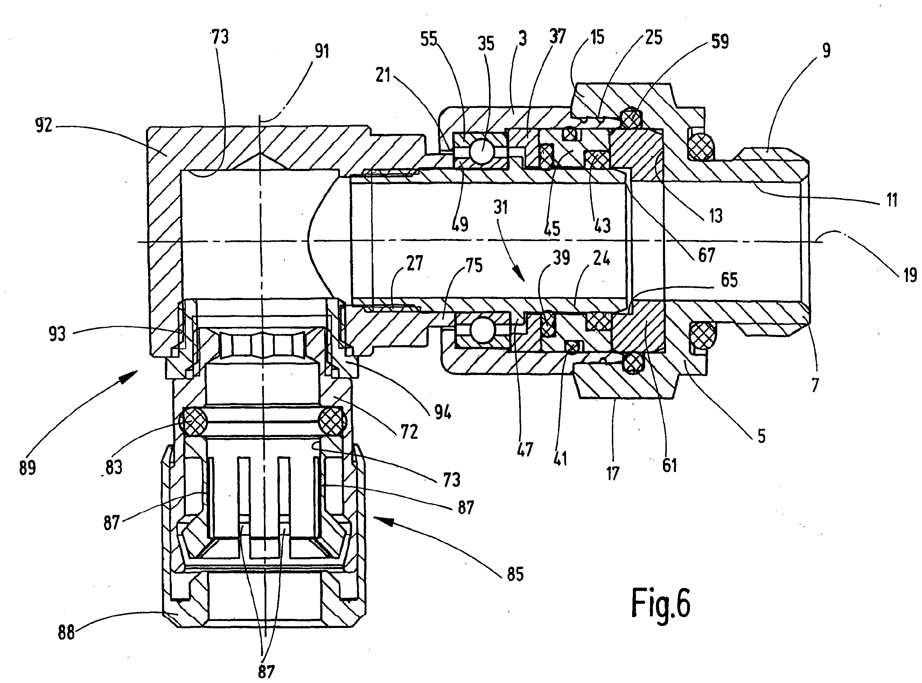

Die Fig. 5 und 6 zeigen ein abgewandeltes Beispiel, bei dem an der durch das freie Ende der Hohlwelle 24 gebildeten Anschlussstelle eine winkelförmige Anschlusskomponente 89 angeschlossen ist, die die Fluidverbindung in Richtung einer Achse 91 fortsetzt, die zur Achse 19 des Gehäuses 1 im rechten Winkel verläuft. Die Anschlusskomponente 89 weist einen Anschlusskörper 92 auf, der, wie der Hohlkörper 72 der Anschlusskomponente 71, einen inneren Kanal 73 als Fortsetzung des Fluidweges der Hohlwelle 24 aufweist. Wie der Hohlkörper 72 ist der Anschlusskörper 92 mit dem Außengewinde 27 der Hohlwelle 24 verschraubt, wobei, wie beim vorigen Beispiel, ein Endabschnitt 75 die Durchtrittsöffnung 21 im Gehäuseteil 3 durchgreift und am Innenring 49 des Kugellagers 35 anliegt. Der Kanal 73 im Anschlusskörper 92 weist einen zur Achse 91 koaxialen Abzweig mit Innengewinde 93 auf, mit dem ein Gewindering 94 verschraubt ist, in den wiederum der Hohlkörper 72 der Schnellkupplung 85 eingeschraubt ist.

## Patentansprüche

1. Anschlusseinrichtung zur Realisierung eines Drehanschlusses für eine Anschlusskomponente (71, 89), mit einem Gehäuse (1), das eine Anschlussstelle (7) für eine fluidführende Leitung, wie eine Pneumatikleitung, und eine Lagereinrichtung (31) aufweist, und mit einem wellen- oder achsförmigen Anschlussteil (24), das eine weitere Anschlussstelle (27) für die Anschlusskomponente (71, 89) aufweist, wobei der wellen- oder achsförmige Anschlussteil (24) mittels der Lagereinrichtung (31) relativ zum Gehäuse drehbar gelagert ist, wobei ■ die Lagereinrichtung (31) zumindest ein Wälzlager (35) aufweist, das mit der Außenseite seines Außenringes (55) in Anlage mit dem Gehäuse (1) und mit der Außenseite seines Innenringes (49) in Anlage mit dem drehbaren Anschlussteil (24) ist, und wobei die Lagereinrichtung (31) neben dem Wälzlager (35) ein Gleitlager (43) aufweist, das innenumfangsseitig das drehbare Anschlussteil (24) umfasst, **dadurch gekennzeichnet, dass** sich das Gleitlager (43) stirnseitig an einem Einpressring (61) des Gehäuses (1) abstützt, der das Ende (67) des Anschlussteils (24) unter Beibehalten eines radialen und axialen Abstandes umfasst, und dass das Gleitlager (43) ansonsten in einem Abstandsring (45) aufgenommen ist.

2. Anschlusseinrichtung nach Anspruch 1, **dadurch gekennzeichnet, dass** ein Wälzlager in Form eines Kugellagers (35) vorgesehen ist.

3. Anschlusseinrichtung nach Anspruch 2, **dadurch gekennzeichnet, dass** der Abstandsring (45) mit dem Gleitlager (43) zum Gehäuse (1) hin, insbesondere mit einem O-Ring (41), radial abgedichtet ist und in axialer Richtung sich an einer weiteren Dichtung, insbesondere in Form eines Wellendichtringes (39), abstützt, der das Anschlussteil (24) umfasst und gegenüberliegend zu dem Abstandsring (45) eine Anlagefläche für einen Distanzring (37) aufweist, der an dem Außenring (55) des Kugellagers (35) stirnseitig angreift.

4. Anschlusseinrichtung nach Anspruch 3, **dadurch gekennzeichnet, dass** der Distanzring (37) im Querschnitt gesehen winkelförmig ausgebildet ist, mit seinem einen Schenkel (51) an einem Absatz (53) des Gehäuses (1) anliegt und im Bereich seines zweiten Schenkels (57) in Anlage mit der weiteren Dichtung (39) ist und zu dieser gegenüberliegend einen axialen Abstand zu einem radial vorstehenden Lagerabsatz (47) des Anschlussteils (24) aufweist, mit dem das Anschlussteil (24) sich an dem Innenring (49) des Wälzlagers (35) stirnseitig abstützt.

5. Anschlusseinrichtung nach einem der vorstehenden Ansprüche, **dadurch gekennzeichnet, dass** das Gehäuse (1) zweiteilig ausgebildet ist und ein Gehäuseteil (5) die Lagereinrichtung (31) und das andere Gehäuseteil (3) die zugehörigen Anschlussstelle (7) aufweist und dass im Bereich (15) der Verbindung der beiden Gehäuseteile (3, 5) der Einpressring (61) sich zumindest teilweise am Abstandsring (45) mit seinem Gleitlager (43) abstützt.

6. Anschlusseinrichtung nach einem der vorstehenden Ansprüche, **dadurch gekennzeichnet, dass** das drehbar gelagerte und mittels der Lagereinrichtung (31) im Gehäuse (1) in axialer Richtung fixierte Anschlussteil (24) mit seiner zugehörigen Anschlussstelle (27) aus dem Gehäuse (1) herausragt und dass an der Stelle des Durchgriffs des Anschlussteils (24) eine Ringöffnung (21) zwischen Gehäuse (1) und Anschlussteil (24) geschaffen ist, die dem Durchgriff von Teilen (75) der Anschlusskomponente (71, 89) dient, die sich am Innenring (49) des Wälzlagers (35) stirnseitig abstützen und mit dem Anschlussteil (24) fest verbindbar sind.

7. Anschlusseinrichtung nach einem der Ansprüche 5 oder 6, **dadurch gekennzeichnet, dass** zwischen dem Einpressring (61) und dem weiteren Gehäuseteil (3) ein Dichtring (59) angeordnet ist und an dem weiteren Gehäuseteil (3) im Bereich des Überganges zu der Anschlussstelle (7) für die fluidführende Leitung ein weiterer Dichtring angeordnet ist.

8. Anschlussvorrichtung bestehend aus mindestens einer Anschlusseinrichtung nach einem der vorstehenden Ansprüche und einer mit dieser gekoppelten Anschlusskomponente (71, 89), die mittels der Lagereinrichtung (31) und dem drehbar gelagerten Anschlussteil (24) gegenüber der Anschlusseinrichtung relativ zu dieser bewegbar an diese fluidführend angeschlossen ist.

9. Anschlussvorrichtung nach Anspruch 8, **dadurch gekennzeichnet, dass** die zugehörige Anschlusskomponente (71, 89) von ihrem Gehäuseaufbau her linear oder winkelförmig verlaufend ausgeführt ist und an ihrem freien Ende eine Schnellkupplung (85) für die Aufnahme einer weiteren fluidführenden Leitung trägt.

## Claims

1. A connection device for implementing a rotary connector for a connection component (71, 89), with a housing (1) having a connection point (7) for a fluid-conveying line, such as a pneumatic line, and a bearing device (31), and with a shaft-shaped or axle-shaped connector part (24), which has a further connection point (27) for the connection component (71, 89), wherein the shaft-shaped or axle-shaped connector part (24) is mounted by means of the bearing device (31) so as to be rotatable relative to the housing, wherein the bearing device (31) has at least one rolling bearing (35), the outer side of the outer ring (55) of which is in contact with the housing (1), and the outer side of the inner ring (49) of which is in contact with the rotatable connector part (24), and wherein the bearing device (31) has a sliding bearing (43) in addition to the rolling bearing (35), which sliding bearing (43) encompasses the rotatable connector part (24) at the inner peripheral side, **characterized in that** the sliding bearing (43) at the end face rests against a press-fit ring (61) of the housing (1), which ring (61) encompasses the end (67) of the connector part (24) while maintaining a radial and axial distance, and that the sliding bearing (43) is otherwise accommodated in a spacer ring (45).

2. The connection device according to claim 1, **characterized in that** a rolling bearing in the form of a ball bearing (35) is provided.

3. The connection device according to claim 2, **characterized in that** the spacer ring (45) with the sliding bearing (43) is radially sealed towards the housing (1), in particular using an O-ring (41), and, in the axial direction, rests against a further seal, in particular in the form of a shaft seal (39), which encompasses the connecting part (24) and has a contact surface for a distance ring (37) opposite from the spacer ring (45), which distance ring (37) engages with the outer ring (55) of the ball bearing (35) at the end face thereof.

4. The connection device according claim 3, **characterized in that** the distance ring (37) is formed to be angular when viewed in cross-section, one of its legs (51) abuts a shoulder (53) of the housing (1) and is in contact with the further seal (39) in the area of its second leg (57) and has an axial distance to a radially protruding bearing shoulder (47) of the connector part (24) opposite from the further seal (39), with which shoulder (47) the connector part (24) rests against the inner ring (49) of the rolling bearing (35) at the end face.

5. The connection device according to one of the preceding claims, **characterized in that** the housing (1) is formed of two parts, and one housing part (5) has the bearing device (31), and the other housing part (3) has the associated connection point (7), and that the press-fit ring (61) at least partially rests against the spacer ring (45) with its sliding bearing (43) in the area (15) of the connection of the two housing parts (3, 5).

6. The connection device according to one of the preceding claims, **characterized in that** the rotatably mounted connector part (24), which is fixed in the housing (1) in the axial direction by means of the bearing device (31), protrudes out of the housing (1) with its associated connection point (27), and that at the location of the penetration of the connector part (24), a ring opening (21) is created between the housing (1) and the connector part (24), which serves the penetration of parts (75) of the connection component (71, 89), which parts (75) rest against the inner ring (49) of the rolling bearing (35) at the end faces and which can be firmly attached to the connector part (24).

7. The connection device according to one of claims 5 or 6, **characterized in that** a further sealing ring (59) is arranged between the press-fit ring (61) and the further housing part (3), and a further sealing ring for the fluid-conveying line is arranged on the further housing part (3) in the area of the transition to the connection point (7).

8. A connection apparatus consisting of at least one connection device according to one of the preceding claims and a connection component (71, 89) coupled thereto, which is connected to the connection device in a fluid-conveying manner and so as to be movable relative thereto by means of the bearing device (31) and the rotatably mounted connector part (24).

9. The connection apparatus according to claim 8, **characterized in that** the associated connection component (71, 89) is embodied with a linear or angular housing construction and has a quick coupling (85) for receiving a further fluid-conveying line at its free end.

## Revendications

1. Système de raccordement pour la réalisation d'un raccord tournant pour un élément de raccordement (71, 89), avec un boîtier (1), qui comprend un point de raccordement (7) pour une conduite de fluide telle qu'une conduite pneumatique, et un système de palier (31), et avec une pièce de raccordement en forme d'arbre ou d'axe (24), qui comprend un autre point de raccordement (27) pour l'élément de raccordement (71, 89), dans lequel la pièce de raccordement en forme d'arbre ou d'axe (24) est logée de manière rotative par rapport au boîtier au moyen du système de palier (31), dans lequel le système de palier (31) comprend au moins un palier à rouleaux (35) qui, avec le côté externe de sa bague externe (55), est en appui contre le boîtier (1) et, avec le côté externe de sa bague interne (49), en appui contre la pièce de raccordement rotative (24) et dans lequel le système de palier (31) comprend, près du palier à rouleaux (35), un palier lisse (43) qui comprend, du côté de sa circonférence interne, la pièce de raccordement rotative (24), **caractérisé en ce que** le palier lisse (43) s'appuie, côté frontal, contre une bague de compression (61) du boîtier (1), qui entoure l'extrémité (67) de la pièce de raccordement (24) en conservant une distance radiale et axiale, et **en ce que** le palier lisse (43) est logé sinon dans une bague d'écartement (45).

2. Système de raccordement selon la revendication 1, **caractérisé en ce qu'**un palier à rouleaux est prévu sous la forme d'un palier à billes (35).

3. Système de raccordement selon la revendication 2, **caractérisé en ce que** la bague d'écartement (45) est étanchéifiée radialement avec le palier lisse (43) par rapport au boîtier (1), plus particulièrement avec un joint torique (41) et s'appuie, dans la direction axiale, contre un autre joint d'étanchéité, plus particulièrement sous la forme d'une bague d'étanchéité d'arbre (39) qui entoure la pièce de raccordement (24) et qui comprend, en face de la bague d'écartement (45), une surface d'appui pour une bague entretoise (37) qui s'emboîte, côté frontal, avec la bague externe (55) du palier à billes (35).

4. Système de raccordement selon la revendication 3, **caractérisé en ce que** la bague entretoise (37) est conçue, vue en coupe transversale, sous la forme d'un angle, s'appuie, avec une de ses branches (51), contre un épaulement (53) du boîtier (1) et est, au niveau de sa deuxième branche (57), en appui contre l'autre joint d'étanchéité (39) et présente, en face de celui-ci, une distance axiale par rapport à un épaulement de palier dépassant radialement (47) de la pièce de raccordement (24), avec laquelle la pièce de raccordement (24) s'appuie, côté frontal, contre la bague interne (49) du palier à rouleaux (35).

5. Système de raccordement selon l'une des revendications précédentes, **caractérisé en ce que** le boîtier (1) est réalisé en deux parties et une partie de boîtier (5) comprend le système de palier (31) et l'autre partie de boîtier (3) comprend le point de raccordement (7) correspondant et **en ce que**, dans la zone (15) de la liaison entre les deux parties de boîtier (3, 5), la bague de compression (61) s'appuie au moins partiellement contre la bague d'écartement (45) avec son palier lisse (43).

6. Système de raccordement selon l'une des revendications précédentes, **caractérisé en ce que** la pièce de raccordement, logée de manière rotative et fixée dans le boîtier (1) dans la direction axiale au moyen du système de palier (31), dépasse, avec son point de raccordement (27) correspondant, hors du boîtier (1) et **en ce que**, au niveau du passage de la pièce de raccordement (24), une ouverture annulaire (21) est réalisée entre le boîtier (1) et la pièce de raccordement (24), qui permet le passage de pièces (75) de l'élément de raccordement (71, 89), qui s'appuient, côté frontal, contre la bague interne (49) du palier à rouleaux (35) et peuvent être reliées de manière fixe avec la pièce de raccordement (24).

7. Système de raccordement selon l'une des revendications 5 ou 6, **caractérisé en ce que**, entre la bague de compression (61) et l'autre partie de boîtier (3), est disposée une bague d'étanchéité (59) et, sur l'autre partie de boîtier (3), au niveau de la transition avec le point de raccordement (7) pour la conduite de fluide, est disposée une autre bague d'étanchéité.

8. Dispositif de raccordement constitué d'au moins un système de raccordement selon l'une des revendications précédentes et d'un élément de raccordement (71, 89) couplé avec celui-ci, qui est raccordé à celui-ci, de façon à conduire des fluides, au moyen du système de palier (31) et de la pièce de raccordement (24), logée de manière rotative par rapport au système de raccordement, de manière mobile par rapport à celui-ci.

9. Dispositif de raccordement selon la revendication 8, **caractérisé en ce que** l'élément de raccordement (71, 89) correspondant est réalisé, du point de la structure de son boîtier, de manière linéaire ou angulaire et supporte, au niveau de son extrémité libre, un couplage rapide (85) pour le logement d'une autre conduite de fluide.
